# EUROPEAN PATENT APPLICATION

(11) **EP 1 791 065 A2**
(43) Date of publication of application: **30.05.2007**
(21) Application number: 06255636.0
(22) Date of filing: 01.11.2006
(51) Int. Cl.: G06F 17/21

(54) **Infromation processing apparatus and method**

(30) Priority: 02.11.2005 JP 2005320011
(71) Applicant: CANON KABUSHIKI KAISHA, Ohta-ku, Tokyo (JP)
(72) Inventor: Kusakabe, Yuki c/o Canon Kabushiki Kaisha, Tokyo (JP)
(74) Representative: Legg, Cyrus James Grahame

(57) **Abstract**

In order to set correlations of contents to be displayed, a layout edit application (121) which runs on a host computer selects containers (407, 408), and decides the layout of the containers based on the selected containers and a correlation table which defines the layout of the containers.

## Description

### BACKGROUND OF THE INVENTION

### Field of the Invention

The present invention relates to an information processing apparatus and method for deciding a layout by acquiring contents from a database.

### Description of the Related Art

In recent years, software applications have diversified and gained additional functions. Consequently, the number of items to be displayed inevitably increases. Conventionally, the number of display items is increased by utilizing switching by means of multi-windows and tab control (for example, see Japanese Patent Laid-Open No. 11-282600).

Also, a layout system which prepares a plurality of containers in a limited region, inserts data from a database into containers, and dynamically arranges the containers is known. The layout system can variably set the container size of the inserted text and image. However, the layout system is a means for inserting predetermined data into a predetermined container, and displaying the data, and cannot automatically lay out data desired by the user.

For example, assume that there is a database which stores an infinite amount of data, and containers A and B whose size is variable (to be referred to as "variable containers" hereinafter). In this state, data is inserted in variable containers A and B and displayed. When both the data to be inserted into variable containers A and B is large and cannot fall within one page, the size of the data to be inserted into variable containers A and B is made equal, or the data is displayed to fall within the page in a predetermined priority order.

The priority order means the weighting level of an amount of size change which is decided in advance for each variable container. When the variable containers are weighted, a variable container with a high weighting level is displayed in a size close to the set size as much as possible, and a variable container with a low weighting level need not approach the set size.

Such layout systems suffer the following problems. The number of containers cannot be increased or decreased as required. Also, the criteria and container used upon displaying an item to be displayed cannot be decided.

### SUMMARY OF THE INVENTION

According to a first aspect of the present invention, there is provided an information processing method as specified in claims 1 to 8.

According to a second aspect of the present invention there is provided a computer program as specified in claim 9.

According to a third aspect of the present invention, there is provided an information processing apparatus as specified in claims 10 to 13.

According to the present invention, a correlation between contents to be displayed can be set, and screen information based on the set correlation can be generated.

Further features of the present invention will become apparent from the following description of exemplary embodiments with reference to the attached drawings.

### BRIEF DESCRIPTION OF THE DRAWINGS

Fig. 1 is a block diagram showing the arrangement of an information processing system which provides a layout system;

Fig. 2 is a block diagram showing the arrangement in which an engine server is located on a network;

Fig. 3 is a block diagram showing the arrangement of a host computer;

Fig. 4 shows a window provided by a user interface;

Fig. 5 shows representative buttons which can be displayed on a tool bar;

Figs. 6A to 6D are views showing examples of exemplary side rules of a container;

Fig. 7 is a flowchart showing a link setting method;

Figs. 8A to 8C are views showing display examples of a UI;

Fig. 9 is a flowchart of a layout calculation;

Fig. 10 is a flowchart showing details of the layout calculation;

Fig. 11 shows an example of four containers laid out on a page;

Figs. 12A to 12C are views showing display examples of a UI upon layout calculation;

Fig. 13 is a view showing the state of a general variable link;

Fig. 14 is a view showing a dialog used to set link information;

Fig. 15 is a flowchart showing a link setting method;

Fig. 16 shows a layout result upon using a fixed-length link;

Fig. 17 shows a layout result upon using a variable-length link;

Fig. 18 is a flowchart showing a layout based on correlations set for roles;

Fig. 19 shows a registration example of a correlation table;

Fig. 20 shows display/non-display flags of containers and their correlations;

Figs. 21A to 21C are views showing a display state example and transition example of containers;

Fig. 22 shows an example of a electronic medical chart;

Fig. 23 shows an example upon browsing the electronic medical chart shown in Fig. 22 in a view mode;

Fig. 24 shows a window example displayed when the viewer (user) of the window shown in Fig. 23 clicks a "prescription filled" field;

Fig. 25 is a view for explaining controls to be extracted and their layout upon reading out the saved electronic medical chart again;

Fig. 26 is a view for explaining re-input of controls in an edit mode;

Fig. 27 is a view for explaining transition of display based on the correlation table;

Fig. 28 is a view for explaining transition of display based on display disable flags;

Fig. 29 is a view for explaining different correlation tables to be held for respective users;

Fig. 30 shows a setting example of correlation tables possessed by a doctor and medical clerk;

Fig. 31 shows a transition state example of display when the doctor who possesses the correlation table shown in Fig. 30 clicks a control; and

Fig. 32 shows a transition state example of display when the medical clerk who possesses the correlation table shown in Fig. 30 clicks a control.

### DESCRIPTION OF THE EMBODIMENTS

An information processing method and apparatus thereof according to preferred embodiments of the present invention will now be described with reference to the accompanying drawings.

### First Embodiment

### [Layout System]

### •System Arrangement

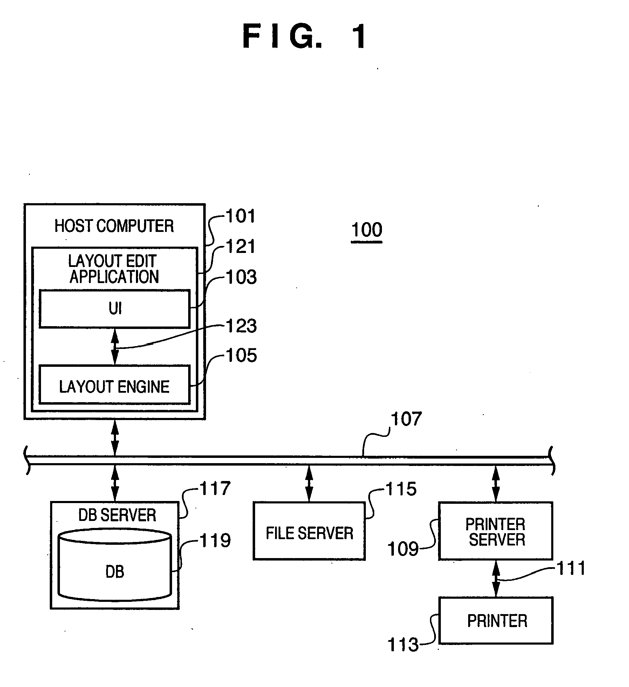

Fig. 1 is a block diagram showing the arrangement of an information processing system 100 which provides a layout system.

A layout edit software application 121 which runs on a host computer 101 includes a user interface (UI) 103 and layout engine 105 as software components. The UI 103 provides display to the user, and also a mechanism that associates data in a database (DB) 119 managed by a database (DB) server 117 with data sources. The layout engine 105 calculates the positions of rectangles and lines based on limitations and sizes given as a rectangle range, as will be described in detail later. Note that the UI 103 and layout engine 105 communicate with each other via a communication channel 123.

The host computer 101 communicates with the DB server 117, a file server 115, a printer server 109, and the like via a network 107.

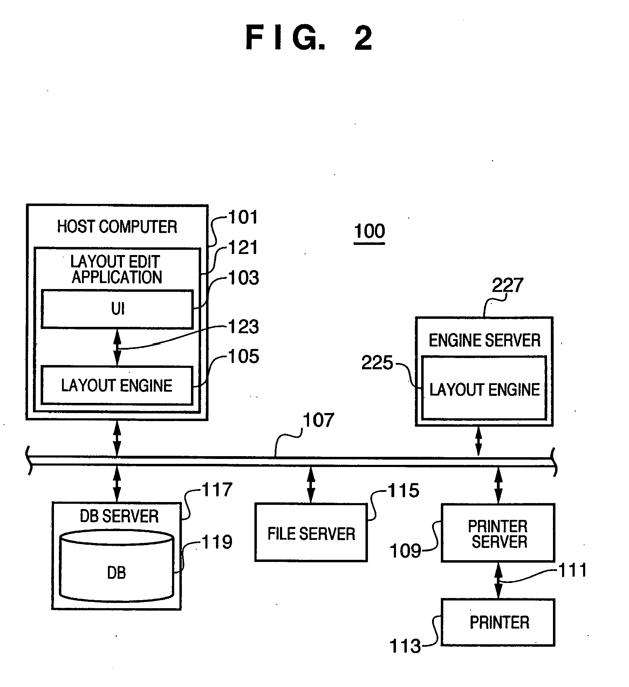

Fig. 2 is a block diagram showing the arrangement in which an engine server 227 is located on the network 107. A layout engine 225 has the same function as that of the layout engine 105.

The layout engine 225 of the engine server 227 communicates with the layout engine 105 of the host computer 101, executes the above calculations for the layout engine 105, and returns the calculation result to the layout engine 105. With this arrangement, the engine server 227 compensates for the calculation performance of the host computer 101, thus speeding up the layout edit processing.

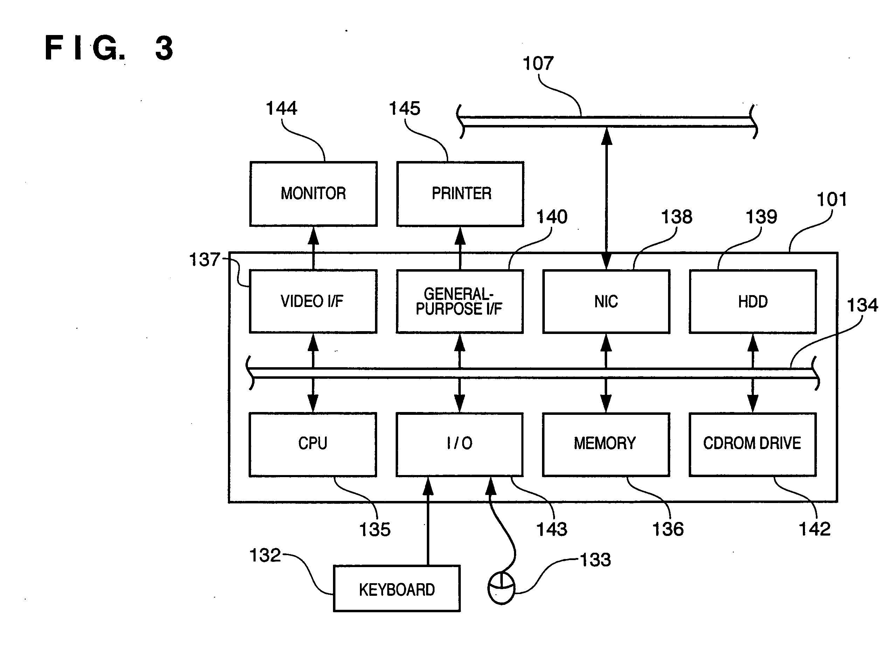

Fig. 3 is a block diagram showing the arrangement of the host computer 101.

A CPU 135 of the host computer 101 executes all or some processes of software such as the layout edit application 121. Especially, display processing that naturally takes place upon layout edit is implemented when the CPU 135 controls components to be described below via a system bus 134.

A hard disk drive (HDD) 139 and a ROM of a memory 136 store software such as an operating system (OS), the layout edit application 121, and the like.

The CPU 135 inputs user instructions via a keyboard 132 and a pointing device 133 connected to an I/O 143. The CPU 135 loads programs and data stored in the HDD 139, a CDROM inserted in a CDROM drive 142, or the like onto a RAM of the memory 136 in accordance with the user instructions. The CPU 135 accesses the file server 115 connected to the network 107 via an NIC 138, and downloads programs and data provided by the file server 115. The CPU 135 executes programs to process data, and displays the processes and results on a monitor 144 connected to a video interface (I/F) 137. The CPU 135 then outputs the program execution result and data processing result in accordance with a user instruction.

The outputs of the program execution result and data processing result include storage in the HDD 139, uploading to the DB server 117 or file server 115 connected to the network 107 via the NIC 138, and the like. Alternatively, such outputs may include printing by means of a local printer 145 connected to a general-purpose I/F 140 such as USB (Universal Serial Bus) or the like. Of course, a printer 113 connected to the network 107 can be utilized in printing via the NIC 138.

### •User Interface

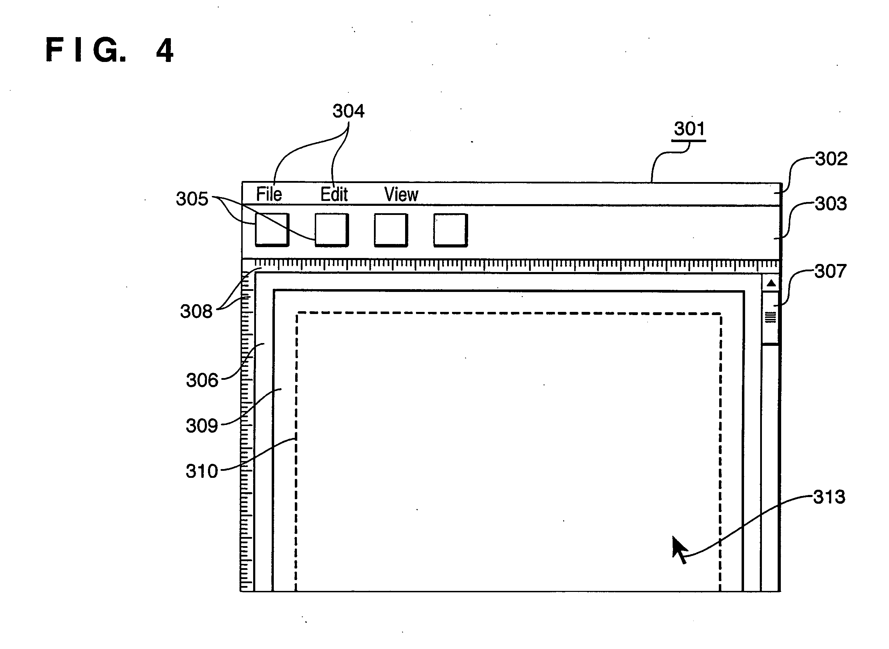

Fig. 4 shows a window 301 provided by the user interface 103. Note that the monitor 144 displays the window 301.

The window 301 comprises a menu bar 302 whose display can be enabled/disabled. Also, the window 301 comprises a floating tool bar 303, which moves to and can be set at an arbitrary position on the screen of the monitor 144, and a work area 306 also in a floating state.

When the user clicks one of the menu items 304 on the menu bar 302, a drop-down menu is hierarchically displayed. The tool bar 303 has many tool buttons 305 and widgets whose display can be enabled/disabled by, e.g., an environmental setting menu of a file menu.

In the work area 306, a cursor pointer 313 is displayed. A ruler 308 whose display can be enabled/disabled is used to indicate the positions of the pointer 313, a page 309, a line, a margin guide 310, and containers or objects. The work area 306 can be scrolled by means of a scroll guide 307.

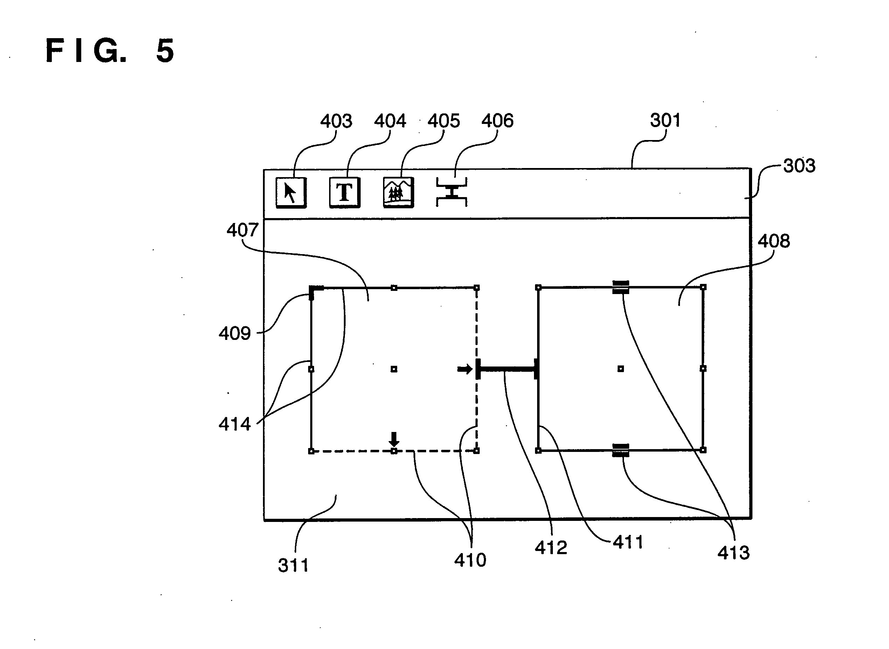

Fig. 5 shows the representative buttons 305 which can be displayed on the tool bar 303.

A selection tool button 403 is used to select, move, and change the size of a side of a container, and to lock and unlock it. The button 403 allows the user to select a plurality of containers by dragging a selection box around containers or selecting containers while holding down, e.g., a CTRL key on the keyboard 132.

An image container tool button 405 is used to create a container having a static or variable image. A text container tool button 404 is used to create a container having static or variable text. A link tool button 406 is used to create a link for controlling the distance between containers.

These buttons are implemented on the UI 103 as tool tips of icons which change according to the operation conditions.

### •Document Template

The work area 306 is used to display and edit the design of a document template. The user designs a display overview of a document in a preparation stage to understand how the merged document changes based on the volumes and sizes of variable data.

If an external data source has a link to a template, variable text and images are displayed in these containers to allow the user to preview the current document.

The document structure and a visual clue upon rendering a container of variable data are always displayed when the pointer 313 is moved onto the container or when the container is selected.

The page size of the document template is designated by the window size. The actual number of pages of each document may change depending on variable data. If variable data cannot be fit into one page, an additional page is automatically generated.

A boundary line (margin guide 310) in each page indicates a maximum displayable region of an object on a page.

Fig. 5 also shows an example of objects set on the document template (or page) 309. Containers 407 and 408 have sides 414 which are fixed by an anchor icon 409 that can be set at an arbitrary position, unfixed sides 410, a link 412 which links the side 410 and a side 411, and sliders 413.

### •Container

A container is a space having static or variable text or a static or variable image in the document template, and is laid out together with other containers. The container can be moved, resized, and re-created using the cursor pointer 313. More properly, the container has a set of settings, visual expression, interaction, and edit operation. The container is defined as follows.

The container has a static or variable content. A variable content is dynamic in the sense that it is brought from a data source and may be displayed differently in different documents. A static content is displayed in the same way in all documents generated using the container. However, the static content may have different positions in respective documents due to the operation of the variable container.

The container has a modification function of text settings such as a background color, border, font, style, and the like to be applied to the content.

The container is merged with data from a data source upon generation of a document. The modification function is visible on display like all the static content. The variable content allows display of specific data from a data source. This expression of the container can be attained, e.g., when it is printed, when it is displayed on the monitor 144, or by both these methods.

The container has a user interface. For example, the container has an interactive graphical user interface (GUI) used to, e.g., edit the container and to make its display settings. Elements of the interface are displayed on the monitor 144, but they are not displayed upon displaying a document, and are not printed upon printing the document. The UI 103 displays some modification functions of the container such as a background color and font, and adds a function required to permit editing or display of the settings of the container. A special function of the UI 103 includes, for example, a corner icon which is used to interactively change and display the size and position of the border or container. Furthermore, the special function includes a number, line, icon, and text which are overwritten to indicate the operation of the container when the container is merged with data from a data source.

### •Limitations on Container

The container has limitations to control how to link contents displayed by respective documents. These limitations link static and variable contents with containers and are the principal method of allowing the user to control generation of a large number of documents from a single document template. An example of the limitations is that "the height of a content of this container has a maximum value of 4 inches". Another example of the limitations is that "the left ends of contents of the containers must be displayed an identical horizontal position in respective documents". The contents described here are various methods for displaying and editing such limitations.

The user can designate the sizes and positions of contents of documents using the containers.

The sides of one container define virtual boundary lines within which associated contents are displayed in documents. For example, defining the left side of the container amounts to defining the displayable leftmost sides of the associated contents in every document. Likewise, defining the height of the container amounts to defining the limitation on the heights of the content associated with created documents. The above differences will be clarified below with reference to the UI 103.

Term "fixed" is used to define some values to limit display of the content is common to all documents.

If the width of the container is fixed, the same widths are assigned to the associated contents in all documents. If the height of the container is fixed, the same heights are assigned to the associated contents in all documents.

If the limitation on the distance is fixed, the designated distance is a limitation for all documents. If the right and left sides of the container are fixed, the horizontal positions of the sides are the same in a page for all documents. However, the height or vertical position of the container is variable. For example, if the left side of the container is fixed, the associated contents may be displayed near the top of a page in one document, or may be displayed near the bottom of a page in another document. However, the left sides have the same horizontal position in all cases.

If the top and bottom sides of the container are fixed, the height and the vertical positions of the sides of containers are the same in a page for all documents. However, the width and horizontal position of the containers are variable.

The vertical axis of the container is an imaginary vertical line located between the parallel right and left sides of the container. If the vertical axis of the container is fixed, the averages of the horizontal positions of the right and left sides of containers are the same in all documents. With this limitation, the width of the container can change. In a document having different right and left sides, the right and left sides may be far from or near the vertical axis, but the vertical axes are located at the same horizontal position in all documents. However, the height and horizontal position of the container are not influenced by this limitation.

Likewise, if the horizontal axis is fixed, it limits the vertical positions of the top and bottom sides of the container, but the height of the container is not influenced by this limitation.

On the other hand, if both the horizontal and vertical axes are fixed, this means that the central position of each container is fixed. However, the width and height of the container are not influenced by this limitation.

If a corner of the container, the middle position between the sides of the container, or the central position of the container is fixed, contents are displayed at the same positions in all documents and at the same positions associated with containers. For example, if the upper left corner of the container is fixed, the upper left positions of laid-out containers are the same in all documents.

The vertical side or axis is fixed in terms of the right or left side, right or left margin, or another horizontal position of a page. Likewise, the horizontal side or axis is fixed in terms of the top or bottom side or margin, or another vertical position of a page. Term "fixed" is important only when documents have different page sizes, since documents have no difference if all documents have the same page size.

The antonym "variable" of the term "fixed" means that limitations on the side, axis, corner, middle position, or document may change among documents. However, a document specific setting may not require this. For example, there are other external limitations such as actual preferred positions of sides due to change. If no external limitations are applied, since the sides are labeled as "unfixed", the positions of the sides can be changed.

### •Display and Edit Container

### Create New Container

There are two types of containers, i.e., a text container and image container. The text container has text and an embedded image. The image container has an image alone.

A new container is created by clicking the text container tool button 404 or image container tool button 405 in Fig. 5, and dragging a rectangle on the document template 309. As an alternative, a new container can also be created by activating the text container tool button 404 (or image container tool button 405) by clicking, and then clicking an arbitrary position on the document template 309.

A dialog box or another prompt used to insert a container of a default size or to set the size of a new container is displayed. Some containers are dynamically created by a schema which is defined or calculated in advance, and are laid out.

### Display Container

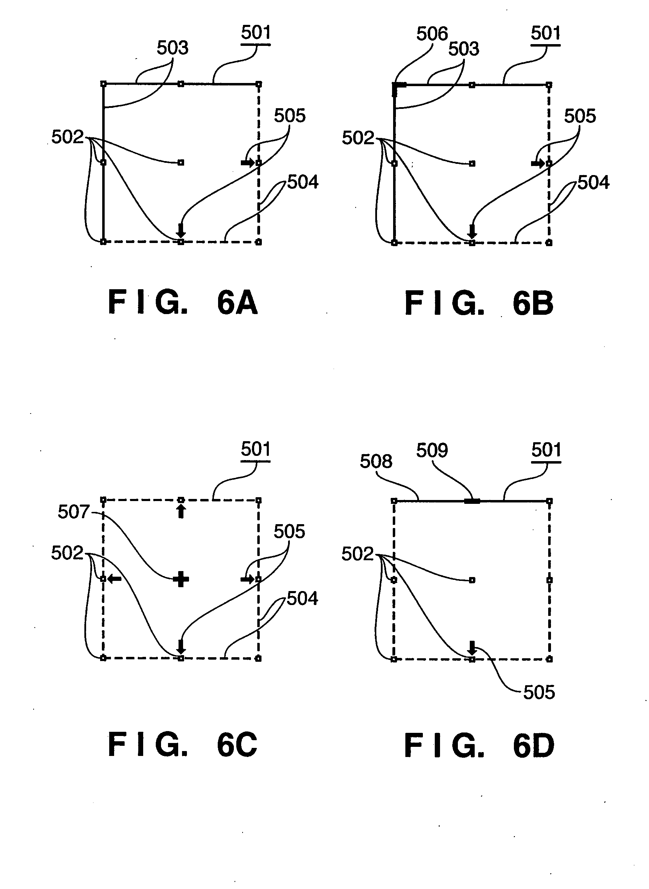

The state of the set container is preferably rendered by a graphical expression. The states of some sides may be fewer than graphic display since some conditions are independently expressed. Figs. 6A to 6D are views showing examples of exemplary side rules of a container.

Figs. 6A to 6D are views showing examples of exemplary side rules of a container.

The layout edit application 121 draws the sides of a container using solid lines 503 or broken lines 504 to express the states of the sides. The container has icons of anchors 506, 507, and 509, handles 502, and sliders (denoted by reference numeral 413 in Fig. 5), extend/shrink icons 505, and a color. Note that each handle 502 is a control point used to move or modify the side.

The container display rules in Figs. 6A to 6D are as follows: (1) A fixed side is rendered by a solid line, and an anchor 509 is rendered near its center.

(2) For a container with a fixed width, the right and left sides are rendered by solid lines.

(3) For a container with a fixed height, the top and bottom sides are rendered by solid lines.

(4) No axis is rendered.

(5) A side which is not rendered is rendered by a broken line, and an extend/shrink icon 505 is rendered near it.

(6) If crossing sides (or axes) are fixed, an anchor 506 (or 507) is rendered at their intersection.

(7) If no anchor 509 is rendered in case of the fixed side, a slider 413 is rendered near the center of that side.

(8) If neither an anchor nor slider are rendered for the crossing sides (or axes), a handle 502 is rendered at their intersection.

Lines guaranteed by rules 1 to 3 are rendered using broken lines if they are fixed or limited. A variable side guaranteed by rule 5 is rendered by a broken line. Anchors 506 (or 507) are displayed for fixed sides guaranteed by rules 6 to 8, sliders 413 are displayed for some fixed sides, and handles 502 are displayed for some other fixed sides.

In the above description, a side must be rendered only once. Once a given rule is applied to the side to be rendered, that rule is never applied to the same side again later. For example, if a container is too small and icons overlap each other, or it makes other display functions indistinct, simpler icons may be displayed, or display of the icons may be omitted.

The rendering position of the variable side depends on the content of a container. As will be described later, "dynamic calibration processing" which means that the content is merged with the document template and is visualized by the UI 103 is used. Alternative means that decides whether the contents areas or variable sides of containers which are averaged in all documents are to be laid out on the UI 103 may be used.

These content expressions provide graphical means that display the states of the sides of a container. The expressions can be interpreted as follows.

•The broken lines 410 shown in Fig. 5 depend on the content in a container, and mean the positions of the sides in a document.

•The solid lines mean the limited sides. This is because the sides 414 in Fig. 5, or the width or height of the container, are fixed. Note that the width and height of the container 408 in Fig. 5 are fixed.

• An anchor means that the intersection of the sides or axes is fixed. Therefore, anchor points appear at horizontal and vertical positions of all documents. Obviously, the anchor is fixed. The anchor 409 shown in Fig. 5 is an example of an anchor which means that the crossing sides 414 are fixed.

•A slider means that the corresponding side is fixed. The position of a container is decided by the "length of the slider" along the side. For example, the sliders 413 shown in Fig. 5 mean that the content of the container 408 may be displayed at the left or right side of a position expressed by a specific diagram in a document.

Some or all of these icons and sides may or may not be rendered depending on the selected tool or container to be highlighted or activated. In general, since the sides and icons of a container are used to help design the document template, they are not displayed when the content is displayed.

Settings of the minimum or maximum values of the width and height of a container are displayed on a subsidiary dialog window.

In a container 501 shown in Fig. 6A, both the width and height are variable, fixed sides 503 are expressed by the solid lines, and variable sides 504 are expressed by the broken lines. Extend/shrink icons 505 indicate that the neighboring sides 504 are variable.

In a container 501 shown in Fig. 6B, both the width and height are variable. An anchor 506 indicates that the intersection of sides 503 is fixed.

In a container 501 shown in Fig. 6C, both the width and height are variable. An anchor 507 and extend/shrink icons 505 indicate that the container can be arbitrarily extended or shrunk from the center of the container 501.

In a container 501 shown in Fig. 6D, both the width and height are variable except that a top side 508 is fixed. An anchor 509 located near the center of the top side 508 indicates that the top side 508 is fixed. An extend/shrink icon 505 indicates that the container can be extended or shrunk in the vertical direction by moving the bottom side.

### •Link

A link indicates an association between containers. The association indicates the distance between the containers, and the layouts of the containers associated by the link are calculated while they are influenced by each other's layout changes. A link 412 shown in Fig. 5 associates the containers 407 and 408 with each other. The link setting method and the calculation method of the layouts of the containers associated by the link will be described later.

### Set Link

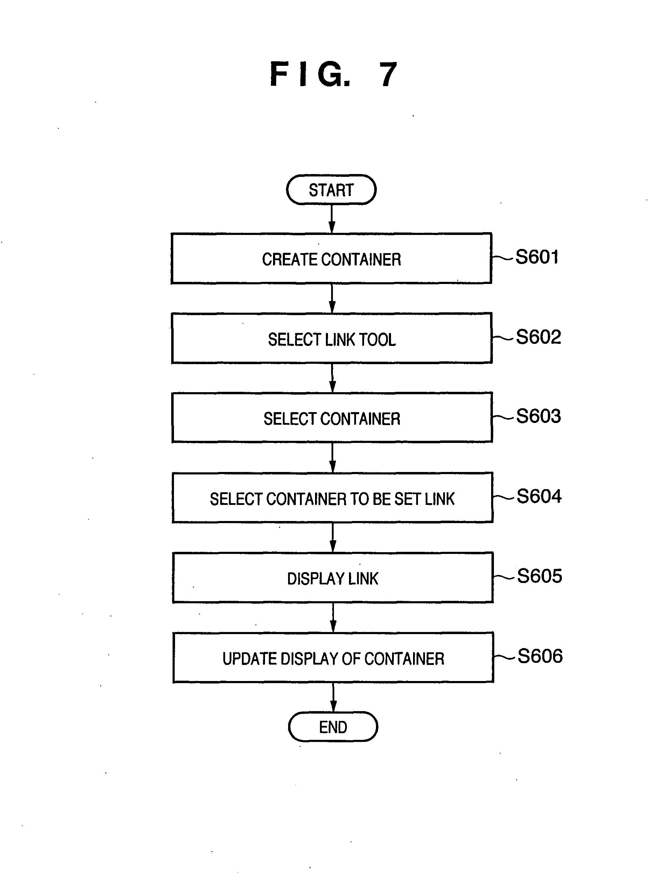

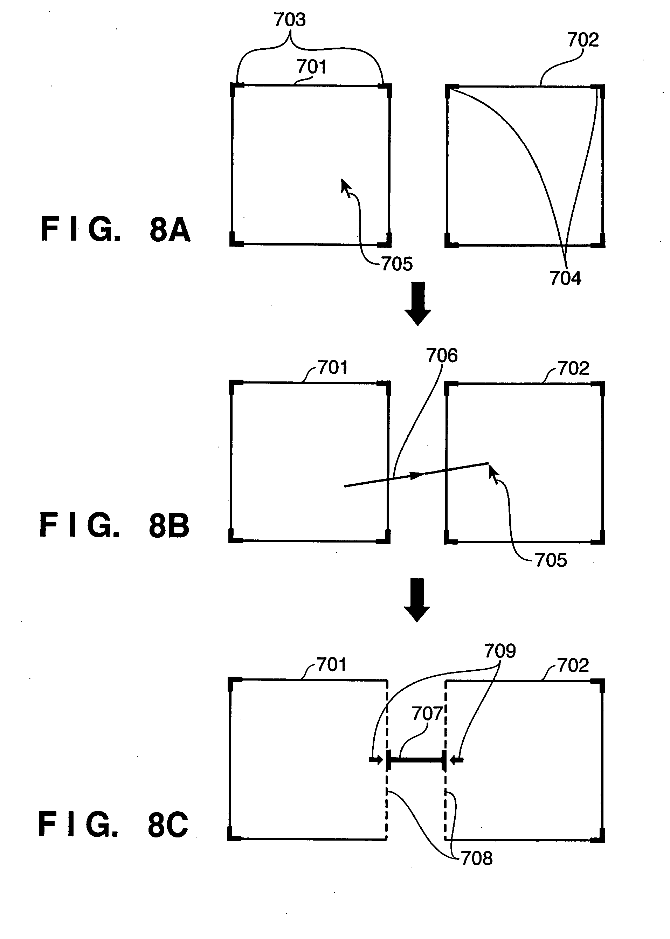

Fig. 7 is a flowchart showing the link setting method. The layout edit application 121 provides this processing to the user. Figs. 8A to 8C show display examples of the UI 103. The method of setting a link to containers will be described below using these drawings.

Upon setting a link, the user creates at least two containers to which a link is to be set (S601). The user clicks the link tool button 406 to make it active (S602).

Sides 701 and 702 are fixed by anchors 703 and 704. The user moves a cursor pointer 705 to one container to which a link is to be set and clicks it to select that container (S603).

As shown in Fig. 8B, the user moves the cursor pointer 705 to the other container, and clicks it (S604). A line 706 shown in Fig. 8B is a straight line which connects the click position in Fig. 8A and the position after movement of the cursor pointer 705, and is a user interface indicating the position where the link is set.

After step S604, a link 707 is displayed (S605), as shown in Fig. 8C. Upon setting the link 707, display of the containers is automatically changed (S606).

Sides 708 indicated by the broken lines in Fig. 8C are variable sides, as described above. The reason why the states of the sides of the containers change in this way is that the sides of the containers must be set to be variable as a result of the setting of the link 707. This processing is automatically done to avoid inconsistency that all the sides are fixed although the link is set.

Extend/shrink icons 709 shown in Fig. 8C are marks which visually show the user the directions in which the containers can be changed upon setting of the link. In the example of Fig. 8C, the right side of the left container 701 and the left side of the right container 702 become variable. However, this is merely an example, and the right container 702 may change to a setting having sliders 413 shown in Fig. 5.

### •Layout Calculation

The layout edit application 121 comprises a layout mode for creating containers, associating the containers with each other, and creating a layout. Also, the layout edit application 121 comprises a preview mode for inserting the contents of records into the created layout, and previewing the layout result after the contents are actually inserted. When the user selects the preview mode, the layout edit application 121 inserts the contents of actual records and calculates a layout. Note that the preview mode is a layout calculation on display. Upon printing, the contents are inserted, and a layout corresponding to a recording paper size is calculated. In this case, the same calculation method is used. Note that a record is a unit of information recorded in the DB 119 shown in Fig. 1.

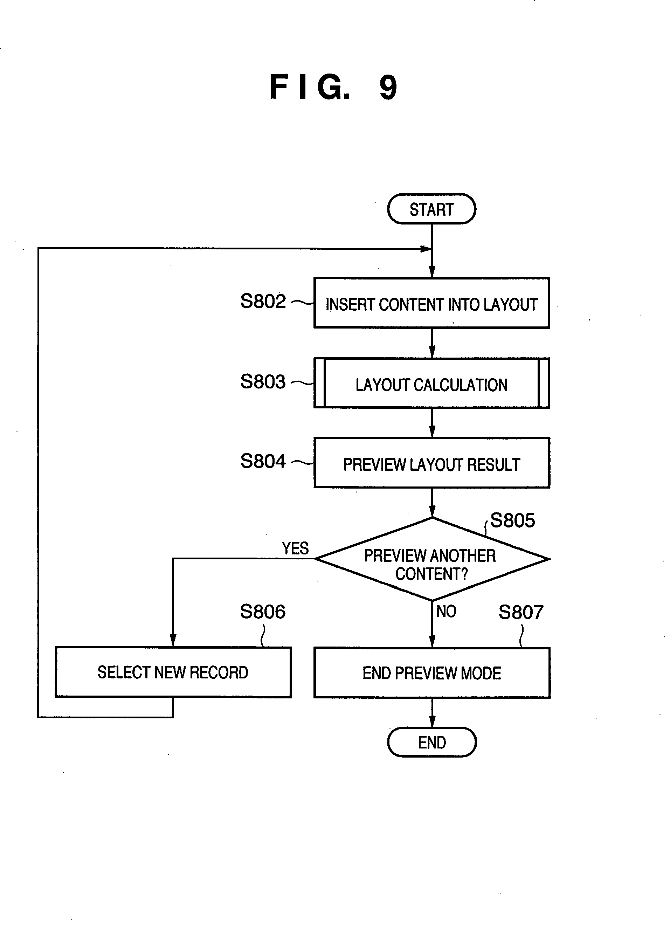

Fig. 9 is a flowchart of a layout calculation, and the layout edit application 121 executes this processing when the user selects the preview mode.

The content of a record to be previewed is selected and is inserted into a layout (S802), and the layout is calculated (S803). The calculated layout is displayed (S804). The user is asked whether he or she wants to preview another record (S805). If the user decides not to preview another record, the preview mode ends (S807).

If the user decides to preview another record, the other record is selected (S806) to select its content and to insert it into a layout (S802). The layout is calculated again (S803), and the calculation result is previewed (S804).

Note that print processing calculates layouts in turn for all contents to be printed. Hence, the print processing does not include any processes in steps S805 and S807. Upon completion of printing of all the contents, the print processing ends.

### Layout Calculation Method

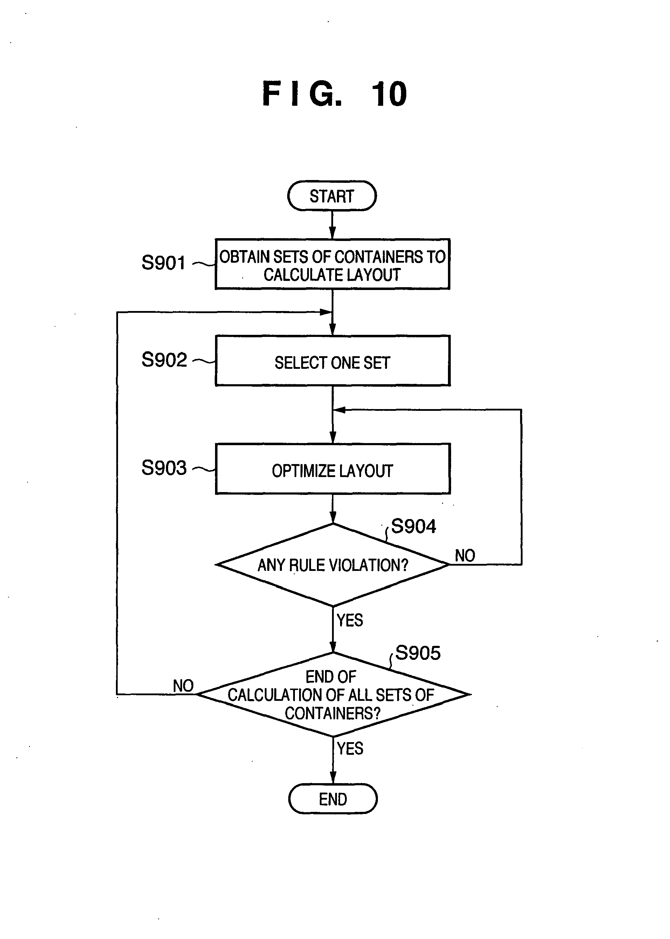

Fig. 10 is a flowchart showing details of the layout calculation (S803).

Set of containers, the layout of which is to be calculated are obtained (S901). The layout calculation is made for the associated containers as one set.

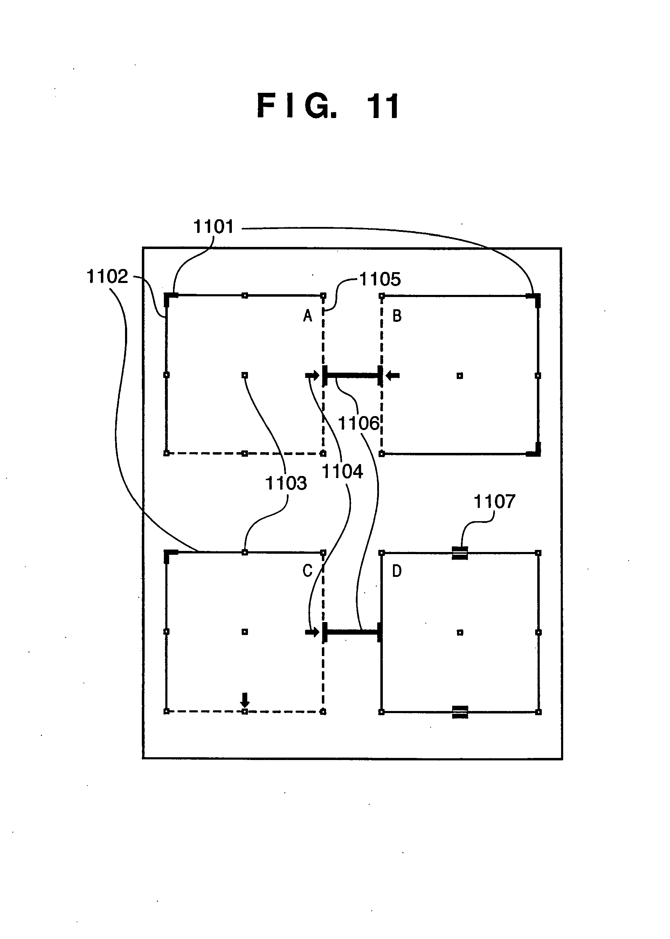

Fig. 11 shows an example in which four containers are laid out on a page. The containers shown in Fig. 11 are associated with each other, and containers A and B, and containers C and D are associated by links 1106. In this case, containers A and B form set 1, and containers C and D form set 2. As described above, reference numeral 1101 denotes anchors; 1102, fixed sides; 1103, handles; 1104, extend/shrink icons; 1105, variable sides; and 1107, sliders.

One set is selected from the obtained sets of containers so as to calculate a layout (S902), and the layout of the selected set is calculated. The layout is optimized to minimize the differences between the sizes of the containers to be laid out and those of actual contents (S903). The optimization of the layout is done so that the differences between the sizes of contents respectively inserted into the associated containers to allow a dynamic change in size and those of the containers to be laid out are possibly equal to each other between the containers. After optimization of the layout, rule violations are checked (S904). If any rule violations are found, the layout is calculated again to correct the rule violations (S904). The rules are limitations which are set by the user upon creation of a layout, and include the sizes and positions of containers, the length of a link, and the like. If the layout free from any rule violations is calculated, the layout of that set is completed. The processes in steps S902 to S904 are executed for all the sets on the page based on the checking result in step S905, thus deciding the layout on the entire page.

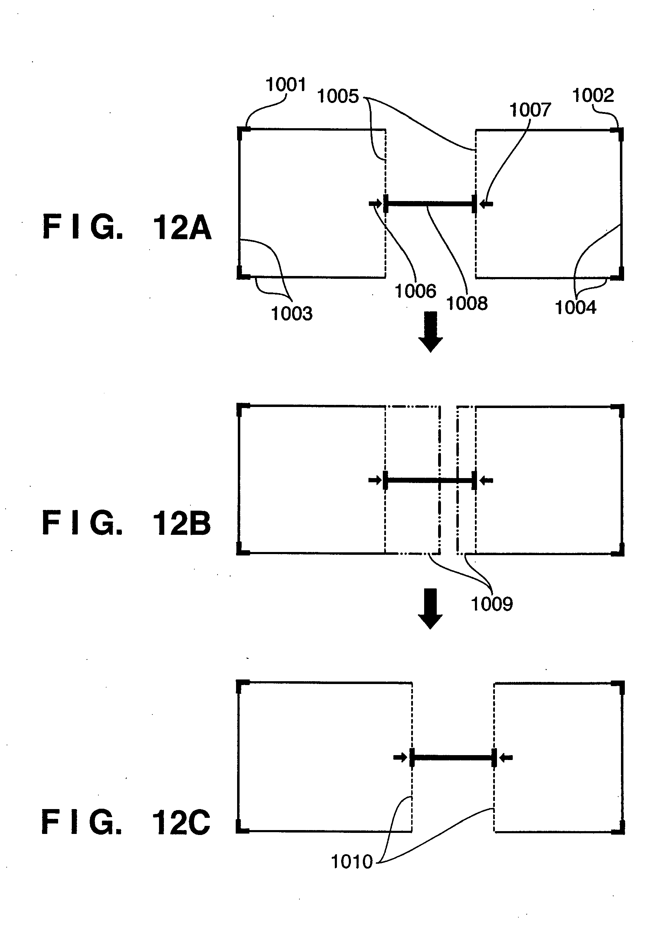

Figs. 12A to 12C show display examples of the UI 103 upon layout calculation.

Fig. 12A shows a state in which given contents are inserted to decide a layout. Reference numerals 1001 and 1002 denote anchors; 1003 and 1004, fixed sides; 1005, variable sides; 1006 and 1007, extend/shrink icons; and 1008, a link. In this state, the contents are changed to insert contents with different sizes.

Fig. 12B shows a state in which other contents are overlaid on the layout state of Fig. 12A. Reference numeral 1009 denotes the sizes of contents to be inserted into the respective containers.

Fig. 12C shows the calculation result of the layout. The sizes of the containers after calculation are calculated to have a difference equivalent to that between the sizes of the contents to be actually inserted and to be free from any rule violations. The content sizes 1009 to be inserted shown in Fig. 12B and content sizes 1010 after calculation shown in Fig. 12C have equivalent differences in the respective containers.

### •Set Variable Link

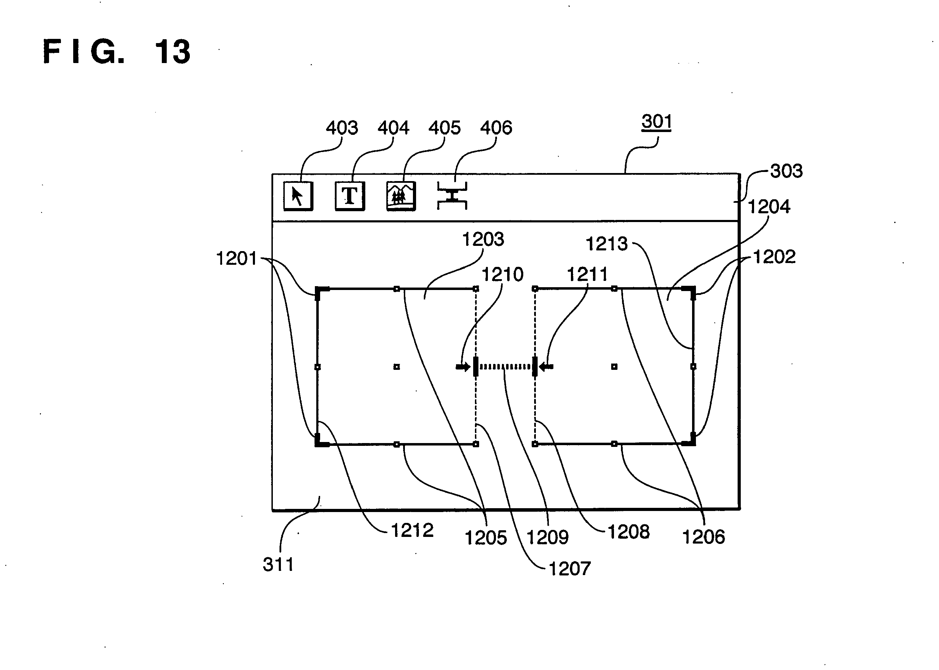

Fig. 13 shows the state of a general variable link.

In nearly the same manner as in Fig. 5, the window 301 displays the tool bar 303 and document template 309, and containers 1203 and 1204 exist on the document template 309. The containers include sides 1205 and 1206 which are fixed by anchors 1201 and 1202. A link 1209 with a variable size is set between the containers 1203 and 1204 to connect them. Note that the containers 1203 and 1204 in such state are called "edge containers" in some cases. Since the link 1209 is set, a right side 1207 and a left side 1208 of these containers are expressed by the broken lines, and extend/shrink icons 1210 and 1211 are displayed. That is, as shown in Fig. 13, the sides 1207 and 1208 are variable.

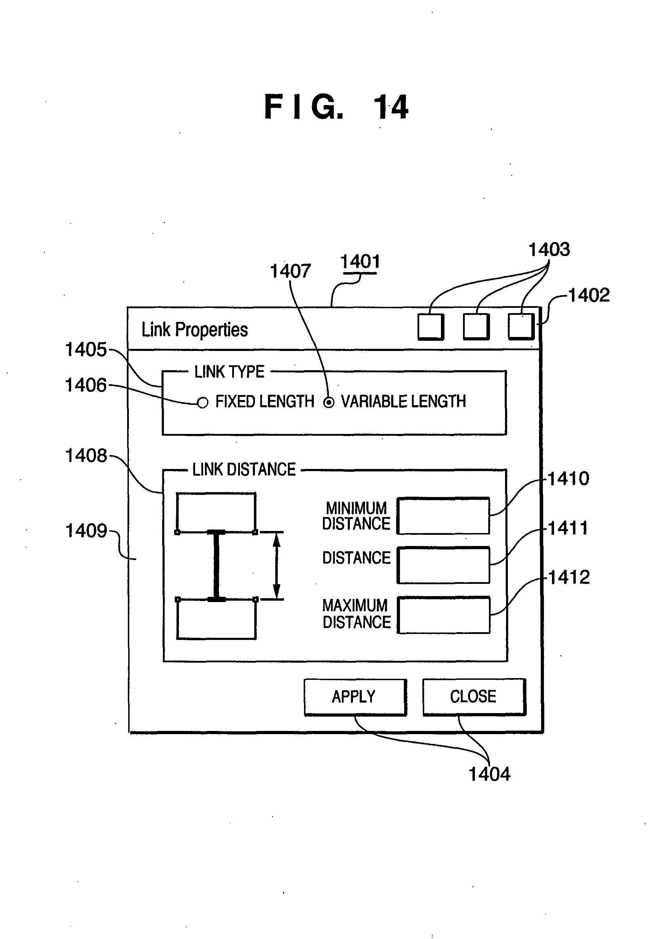

Fig. 14 shows an example of a dialogue 1401 used to set information of the link 1209.

The dialogue 1401 includes a title bar 1402, tool buttons 1403, buttons 1404 used to apply the settings on the dialogue or to close the dialogue, and a region 1409 on which various kinds of information are set. A link with a variable or fixed length can be set by one of radio buttons 1406 and 1407 on a "link type" field 1405. In case of the variable-length link, a maximum value, minimum value, and current value of the distance of the link can be set using text boxes 1410 to 1412 on a "link distance" field 1408.

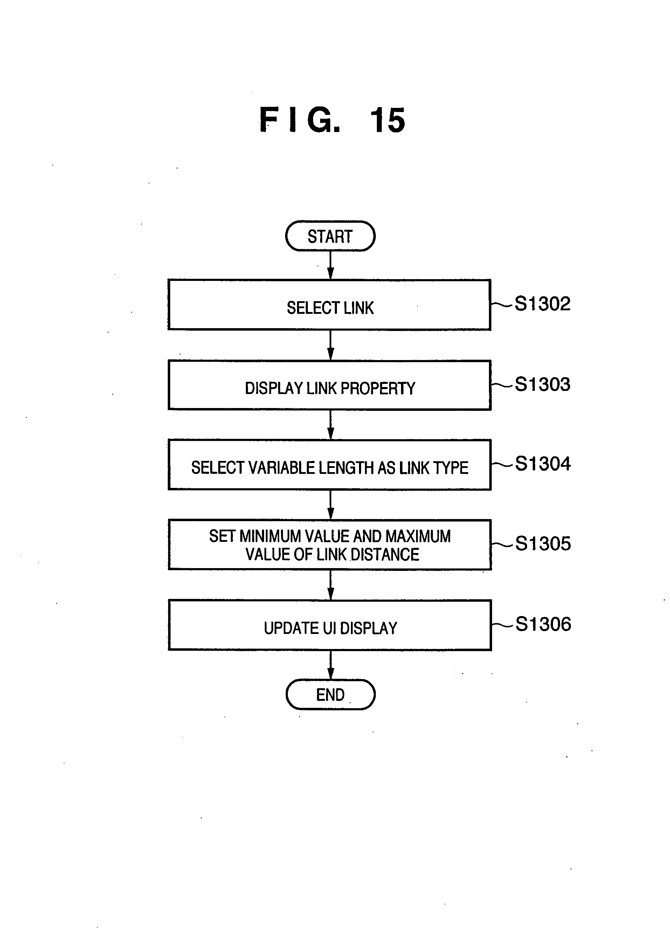

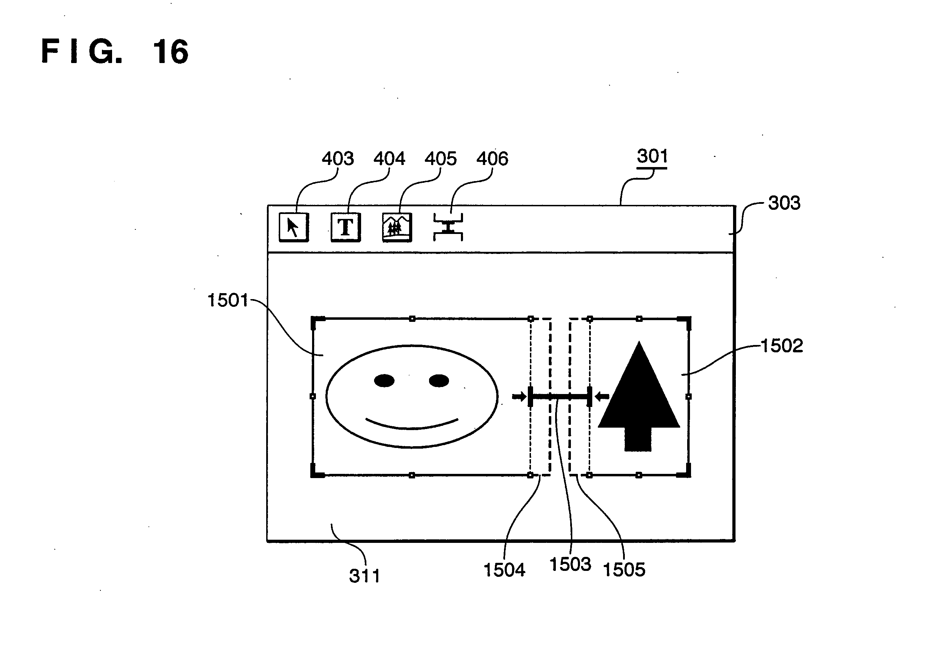

Fig. 15 is a flowchart showing the link setting method, and shows the operation for changing a fixed-length link set between containers 1501 and 1502, e.g., in Fig. 16 to the variable-length link 1209 shown in Fig. 13 in accordance with the link setting method shown in Fig. 7. Note that the layout edit application 121 provides the processing shown in Fig. 15 to the user.

The user moves the cursor pointer and selects the link 1503 by clicking (S1302). Then, the user displays the dialog 1401 shown in Fig. 14 by the operation of the mouse 133 or the key operation of the keyboard 132 (S1303). At this time, since the link 1503 has a fixed length, the radio button 1406 is selected.

Next, the user selects the radio button 1407 to change the link 1503 to a variable length (S1304). With this operation, the text boxes 1410 to 1412 laid out on the "link distance" field 1408 are enabled to allow numerical value settings. The user sets appropriate values in the text boxes 1410 to 1412 to set the distance of the link 1503 (S1305). Next, when the user presses the button 1404 to apply the settings, the display state of the link 1503 changes to that of the link 1209 shown in Fig. 13 (S1306). Note that the setting information on this dialog 1401 is stored in a predetermined area of the memory 136.

Fig. 16 shows the layout result when the fixed-length link 1503 is used. This layout calculation is made as described above.

For example, assume that contents with different sizes are to be inserted into the containers 1501 and 1502 shown in Fig. 16. The size of the content is considered as an optimal size, and the container 1501 extends to the right to be close to a size (optimal container size) denoted by reference numeral 1504 so as to attain the size of the content to be inserted. Likewise, the container 1502 extends to the left to be close to an optimal container size denoted by reference numeral 1505 so as to attain the size of the content to be inserted.

However, the fixed-length link 1503 is set between the containers 1501 and 1502, and the left side of the container 1501 and the right side of the container 1502 are fixed by anchors. For this reason, the sizes of the containers 1501 and 1502, which are preferentially calculated upon layout calculation, are changed. As a result, the containers 1501 and 1502 cannot assure optimal sizes suited to the content sizes, and have container sizes smaller than the optimal container sizes 1504 and 1505. In other words, since the link 1503 has a fixed length, the containers 1501 and 1502 cannot attain their optimal container sizes.

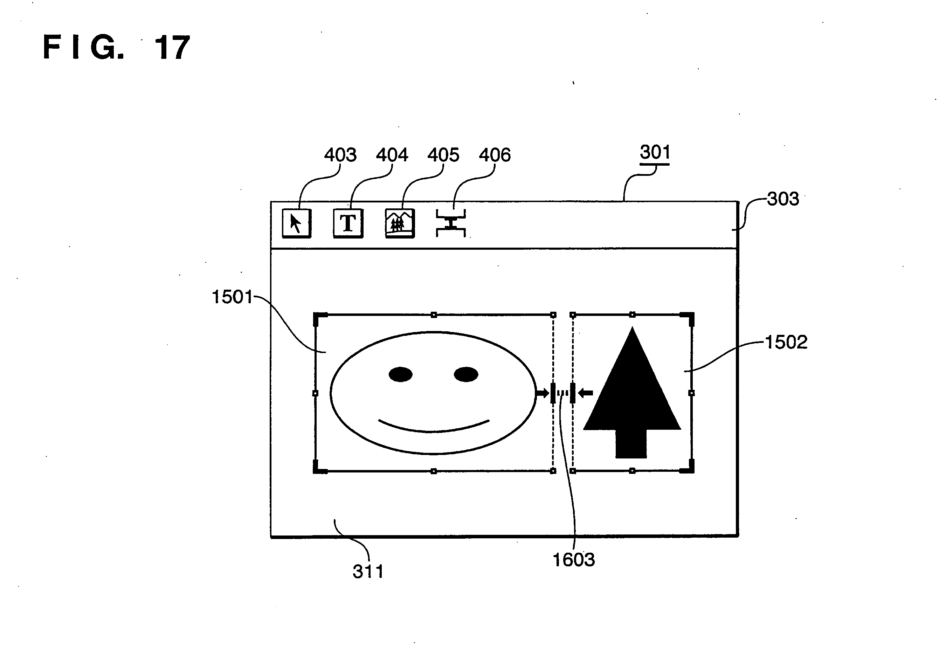

Fig. 17 shows the layout result when a variable-length link 1603 is used. This layout calculation is made as described above.

When the variable-length link 1603 is set between the containers 1501 and 1502, the distance of the link 1603 can be reduced upon changing the sizes of the containers 1501 and 1502. As a result, the sizes of the containers 1501 and 1502 can be extended more than the example of Fig. 16, and optimal container sizes suited to the content sizes can be achieved, or sizes closer to the optimal container sizes can be obtained.

### •Layout Based on Correlations set for Role

The layout edit application 121 lays out containers to have optimal container sizes based on correlations set for respective roles and the properties of records set in the containers.

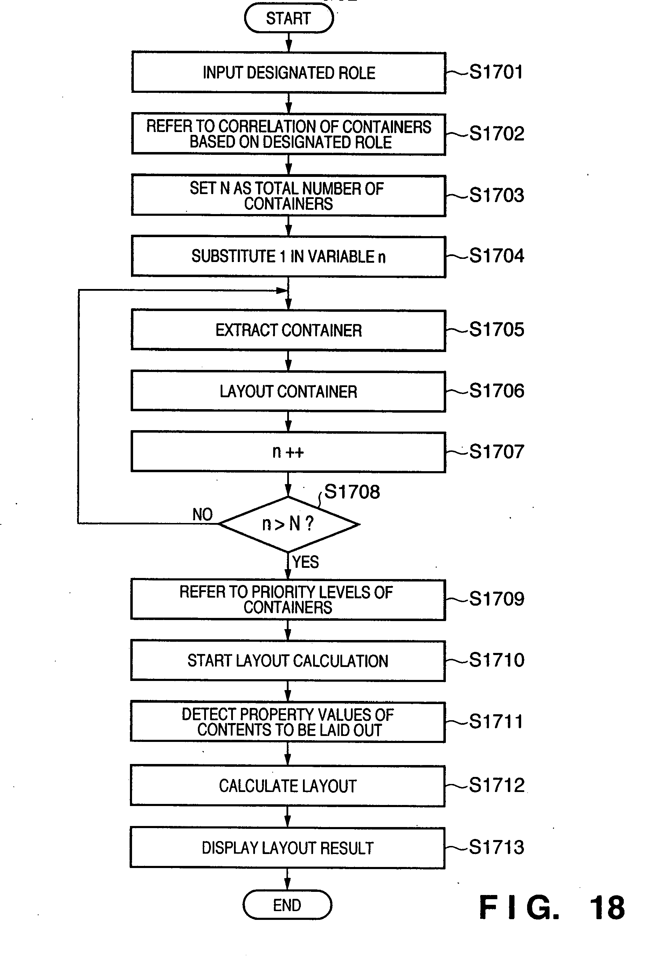

Fig. 18 is a flowchart showing a layout based on correlations set for roles, and shows processing to be executed by the layout edit application 121.

A role designated by the user is input (S1701), and correlations of containers registered in the designated role are referred to (S1702). Note that the setting of the role and the correlations of containers will be described later.

The total number of containers is set in register N (S1703), and 1 is substituted in variable n (S1704). Containers are extracted based on the correlations referred to (S1705), and are laid out (S1706), thus incrementing variable n (S1707). The processes in steps S1705 to S1707 are repeated until n > N is decided in step S1708, thus laying out all containers.

The priority levels of the containers are referred to (S1709) to start a layout calculation (S1710).

The properties of contents set in the containers are detected (S1711). The actual size of each content stored in the DB 119 is obtained from the property of that content. When static text or image is inserted in a content, a size including its size is acquired. A layout is calculated based on the properties of the contents and setting values set in the containers (S1712), and the layout result is displayed on a window provided by the UI 103 (S1713).

### Set Role

Each user may register roles or each group including a plurality of users may register them.

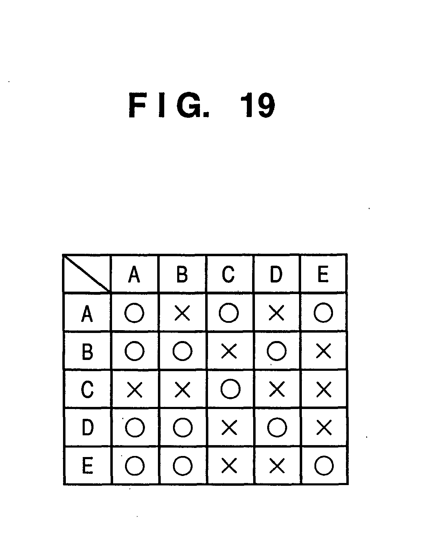

Fig. 19 shows a registration example of a correlation table. A to E shown in Fig. 19 indicate contents, ○ indicates display, and X indicates non-display. The leftmost column indicates main display contents, and the uppermost row indicates sub display contents. For example, in an example of the second row that main-displays content A, contents C and E are sub-displayed in addition to content A. Such a correlation table can be registered for each role.

### Correlation of Containers

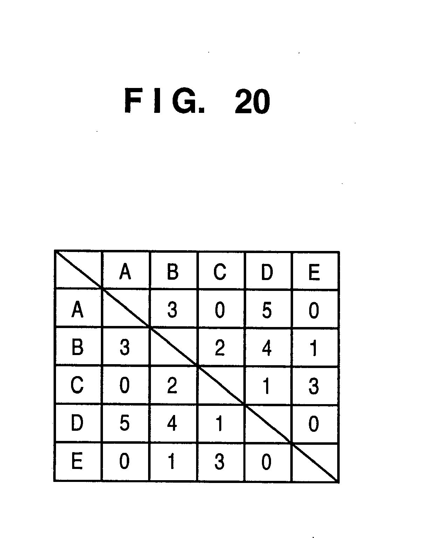

Fig. 20 shows display/non-display flags of containers, and their correlations. A to E shown in Fig. 20 indicate containers, and the numerical value in each cell indicates the display ratio of a container in the leftmost column to another container. For example, when container A in the second row is selected, containers B, C, D, and E are displayed at ratios of 3, 0, 5, and 0 with respect to container A. Note that container A itself is displayed in the set container size. In this manner, the correlation table shown in Fig. 20 has flags indicating display or non-display of containers.

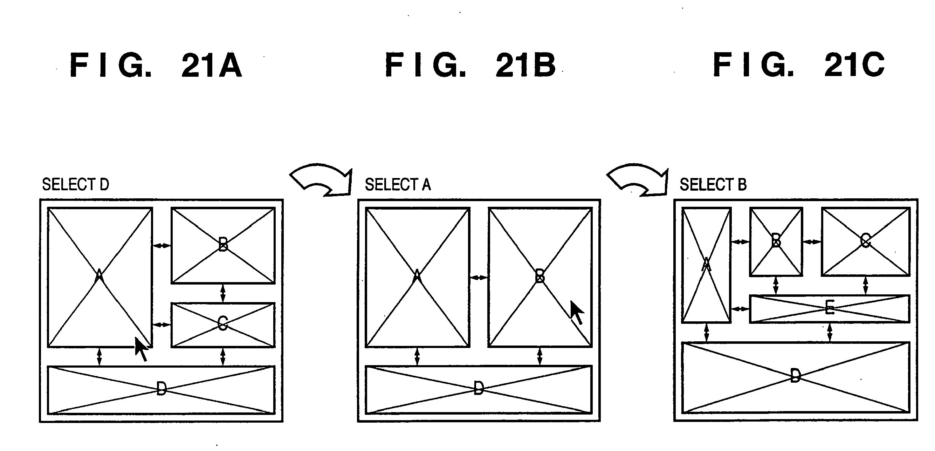

Figs. 21A to 21C show a display state example and transition example of containers.

Fig. 21A shows a display example of a state in which container D is selected. The layout of containers is decided based on selected container D and the correlation table shown in Fig. 20, and Fig. 21A displays the decided layout. In Fig. 21A, containers A, B, and C are displayed at ratios of 5, 4, and 1 with respect to container D. When container A is selected in this display state, the display state transits to that shown in Fig. 21B, containers B and D are displayed at ratios of 3 and 5 with respect to container A, and container C is not displayed. Furthermore, when container B is selected, the display state transits to that shown in Fig. 21C, containers A, C, and D are displayed at ratios of 3, 2, and 4 with respect to container B, and container E is also displayed at a ratio of 1. In this way, the layout is dynamically changed according to the selected container and the correlations of the containers. Also, correlation tables are registered in accordance with roles, and the layout of containers is decided based on the correlation table according to the designated role.

### [Application Example of Layout System]

An application example of the aforementioned layout system to a electronic medical chart will be described in detail hereinafter. The electronic medical chart has various input controls and data, and required display and browse contents are different depending on whether doctors, nurses, medical engineers, chemists, medical clerks, and the like are viewing the data. Therefore, the aforementioned layout system sets roles for users or groups to provide display and browsing of the electronic medical chart that the user wants.

In other words, displaying all pieces of information described in a electronic medical chart impairs visibility upon referring to the electronic medical chart. In case of a electronic medical chart used by integrating a plurality of branches of medicine, a doctor of another branch of medicine must refer to the description contents after he or she displays all pieces of information once. Also, entries of the electronic medical chart include many that need not normally be browsed. That is, even a single electronic medical chart includes different kinds of information to be displayed in correspondence with those of interest for respective users or groups.

### •Overview of Electronic medical chart

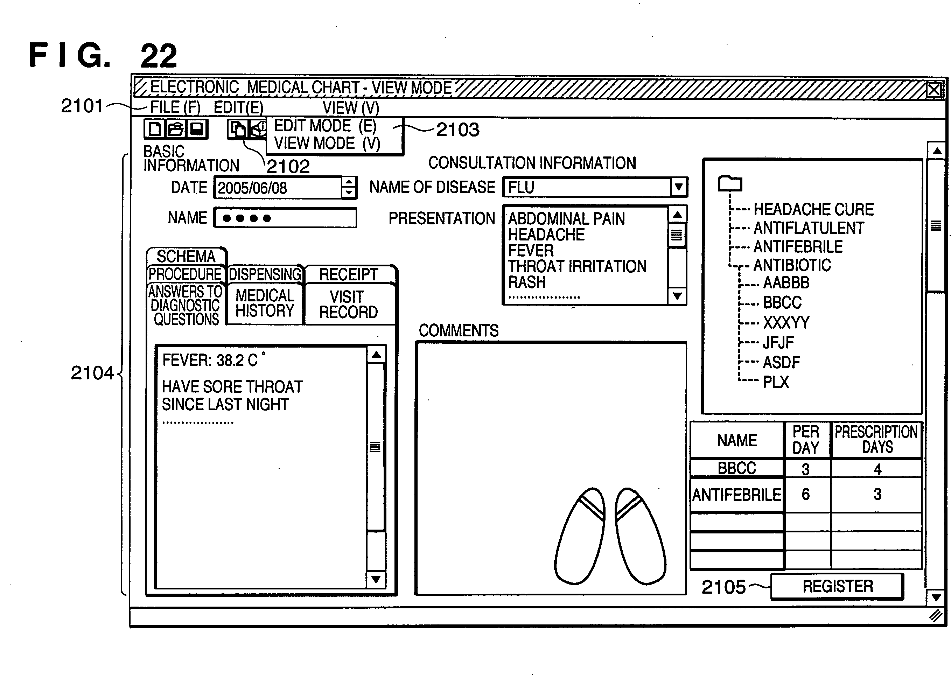

Fig. 22 shows an example of a electronic medical chart.

The electronic medical chart includes a menu bar 2101 and tool bar 2102 on its upper portion. Fig. 22 shows a state wherein the user clicks a view menu to display a drop-down menu 2103 of the view menu. The view menu allows a user to switch between a view mode and an edit mode. Of course, these modes can be switched by a mouse operation (e.g., right clicking of a mouse button) without clicking the view menu.

Under the tool bar 2102, there is an information area 2104 which is used to input, edit, and display mandatory information for the electronic medical chart such as basic information such as a consultation day, patient name, and the like, consultation information, a medical history, receipt, medication information, and the like. Information input to the information area 2104 in the edit mode is stored in the DB 119 in a medical center, and is managed as the contents of the electronic medical chart. Note that Fig. 22 includes a "registration" button 2105 used to register information described in the electronic medical chart in the DB 119. That is, this embodiment exemplifies explicit registration by means of button controls, but the present invention is not limited to such specific registration method. As for the input contents, roles need not be limited, and doctors, nurses, medical engineers, chemists, medical clerks, pharmacists, and the like need only input their associated contents.

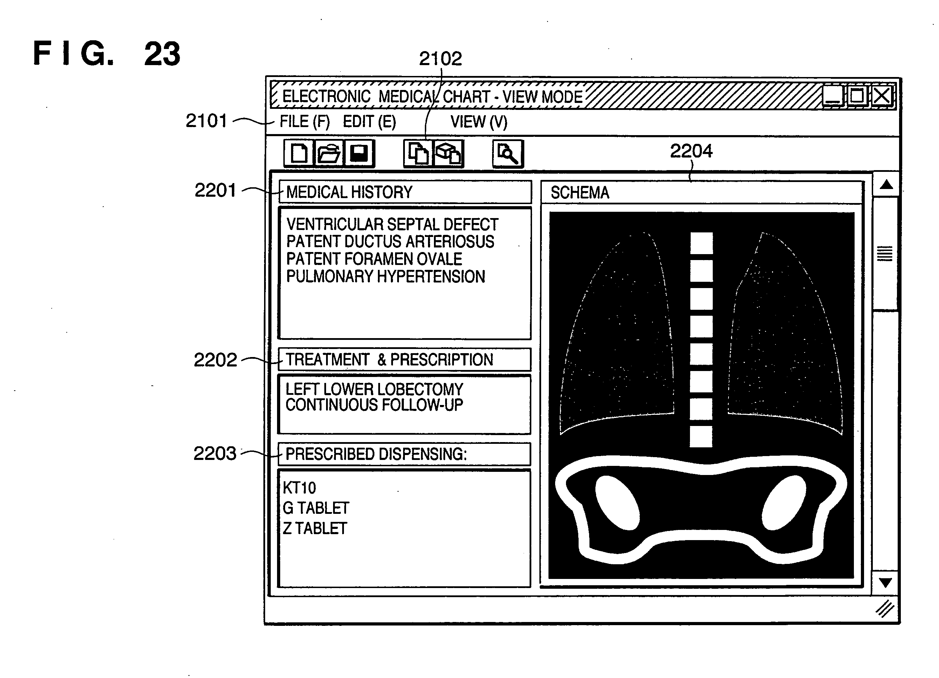

Fig. 23 shows an example upon browsing the electronic medical chart shown in Fig. 22 in the view mode. Fig. 23 displays a "medical history" field 2201, "procedure & prescription" field 2202, "prescribed dispending" field 2203, and "schema" 2204 that shows an X-ray picture as browse information. Display items are not limited to text and images, and all items can be stored in the DB 119 as information of the electronic medical chart by setting and selecting a role.

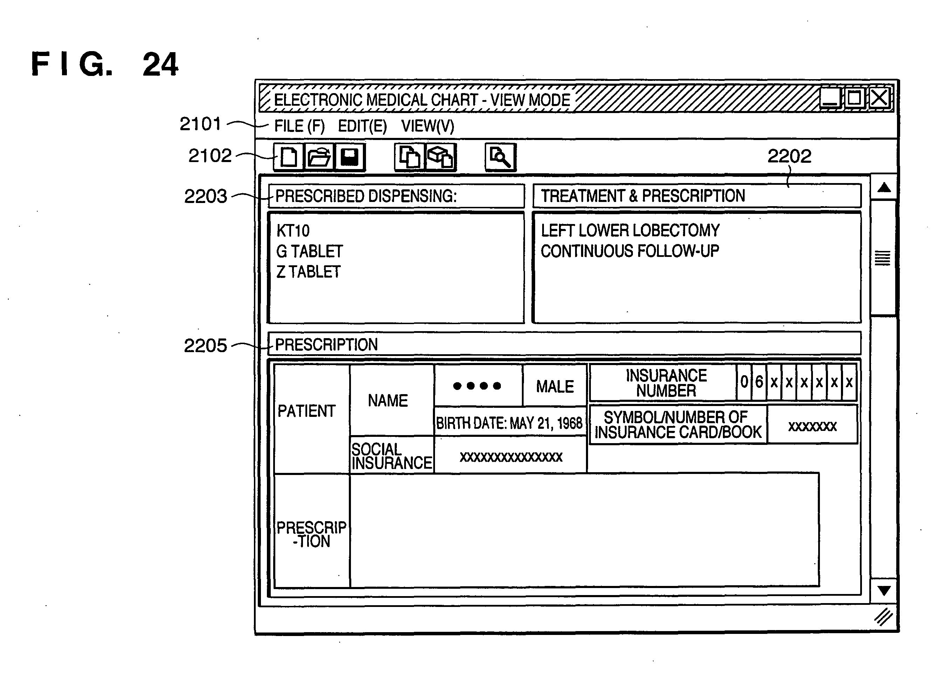

Fig. 24 shows a window example displayed when the viewer (user) of the window shown in Fig. 23 clicks the "prescription filled" field 2203. Based on the aforementioned correlations of the containers, containers are extracted and are laid out again. As shown in Fig. 24, although the layout has changed, the "procedure & prescription" field 2202 and "prescription filled" field 2203 remain displayed, the "medical history" field 2201 and "schema" 2204 disappear, and a "prescription" field 2205 is newly displayed. That is, a layout for displaying contents (containers) based on the correlations set in the content (container) selected by the viewer is made.

In this way, in the electronic medical chart application having a plurality of controls, only controls used are assembled, and the sizes of the respective controls are dynamically laid out within a displayable window size. Since the sizes of respective controls are changed depending on their data sizes, the visibility can be improved.

### •Transition of Display in Electronic Medical Chart System

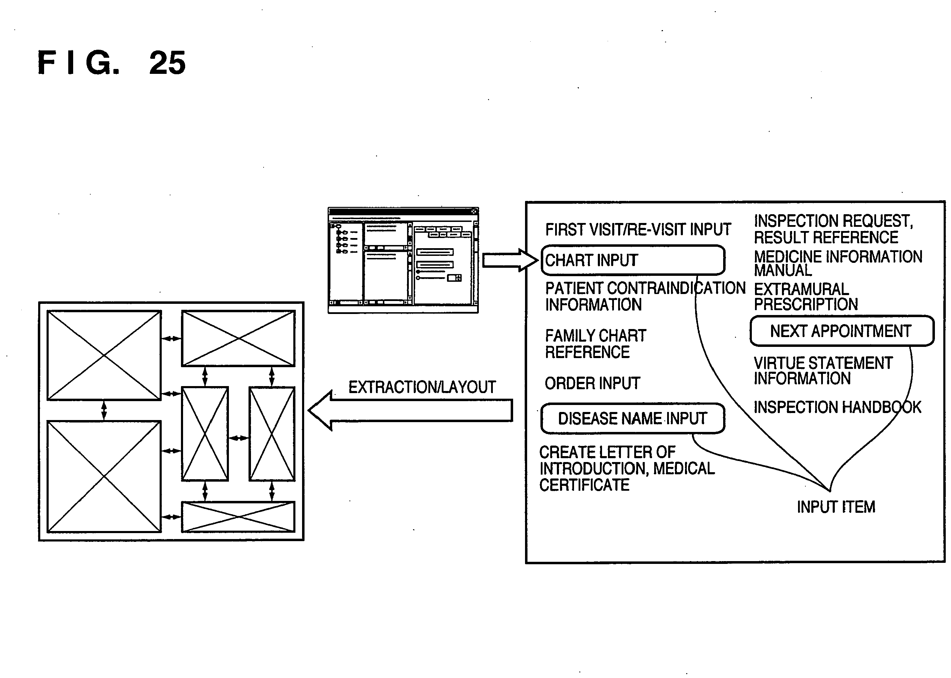

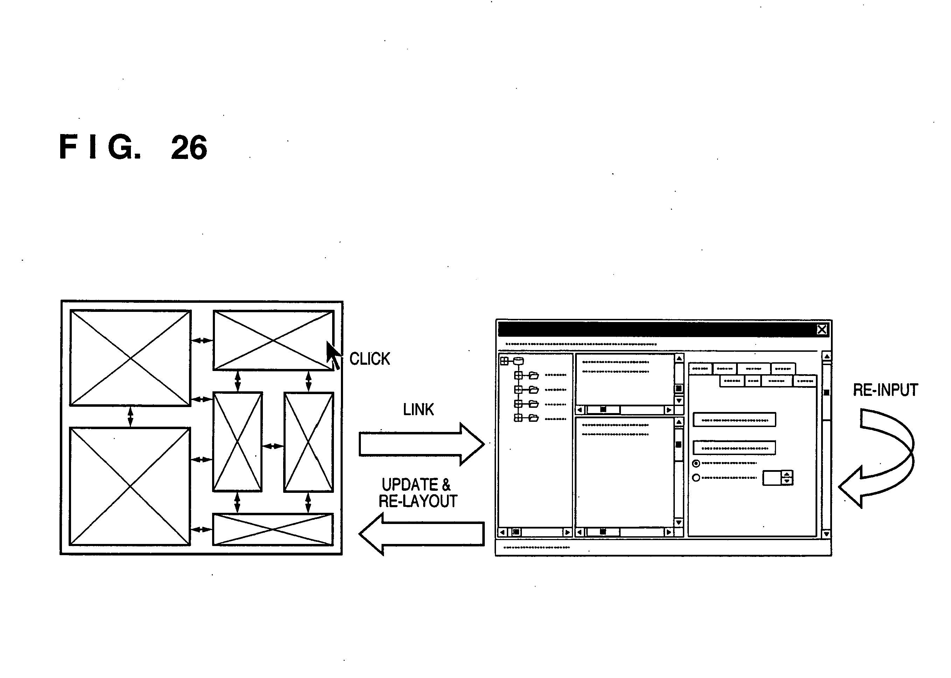

In the edit mode, a doctor inputs required information to required fields of predetermined controls of the electronic medical chart shown in Fig. 22. Upon reading out the saved electronic medical chart again, only the used controls are extracted, and are optimally laid out based on the window size of the monitor 144 and the areas occupied by the respective controls, as shown in Fig. 25. As shown in Fig. 26, the doctor clicks (selects) the control he or she wants to use so as to display an input field of that control, and he or she can re-input information.

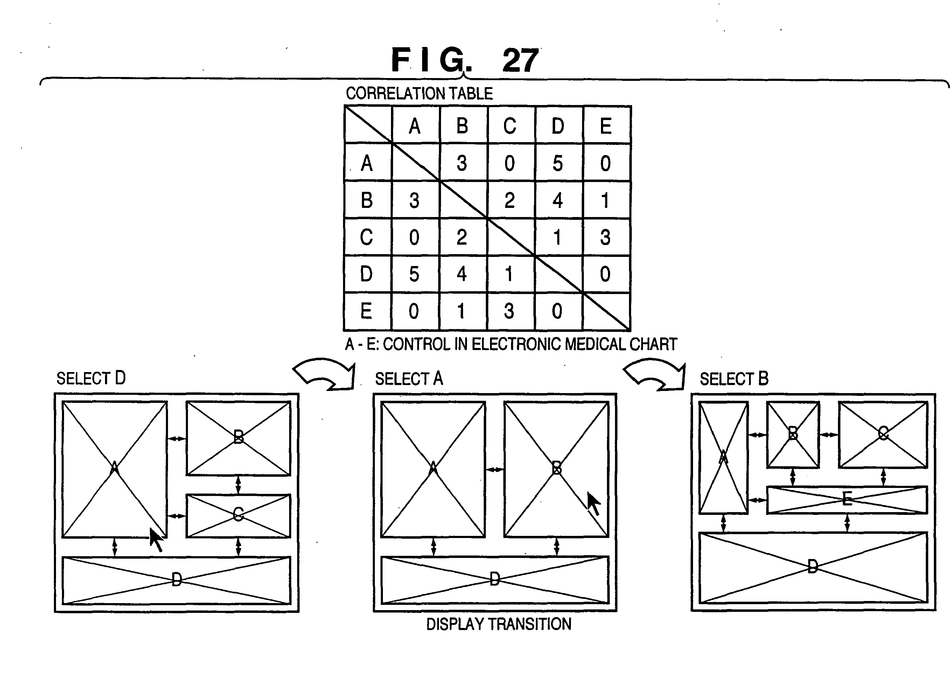

In the view mode, when the viewer clicks one of the controls which are dynamically laid out, controls associated with the clicked control are assembled and laid out again, as shown in Fig. 27. Association is implemented by setting correlations for respective controls, and in case of a link, the controls to be displayed are decided based on their correlations, thus making re-layout and re-display.

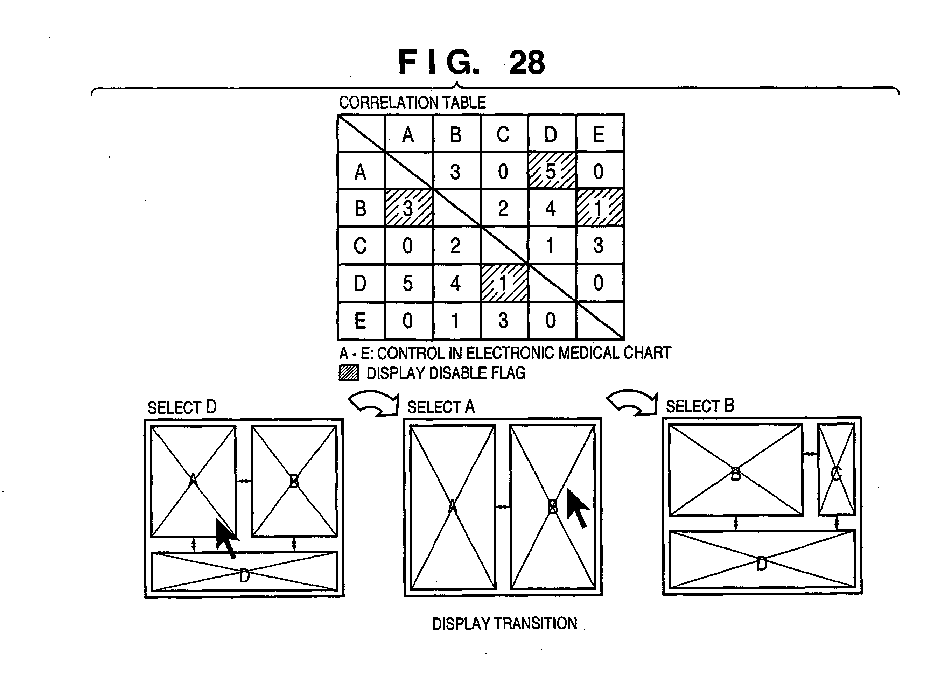

As shown in Fig. 28, the correlation table has weighting coefficients of respective controls, and the controls are laid out based on the weighting coefficients. Furthermore, the correlation table also has flags indicating the necessity of display, thus providing a function of deciding a behavior in which even a control with a high correction value is not displayed if its display is not necessary.

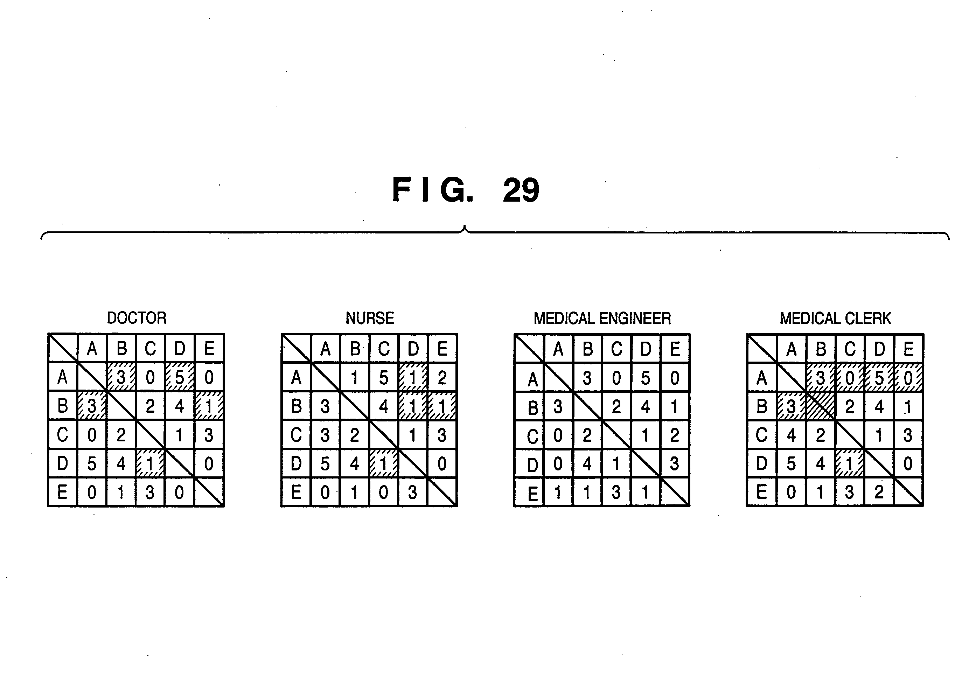

Furthermore, as shown in Fig. 29, when respective users possess different correlation tables, the application has a function of customizing the display contents upon displaying information of the electronic medical chart in correspondence with jobs and work contents.

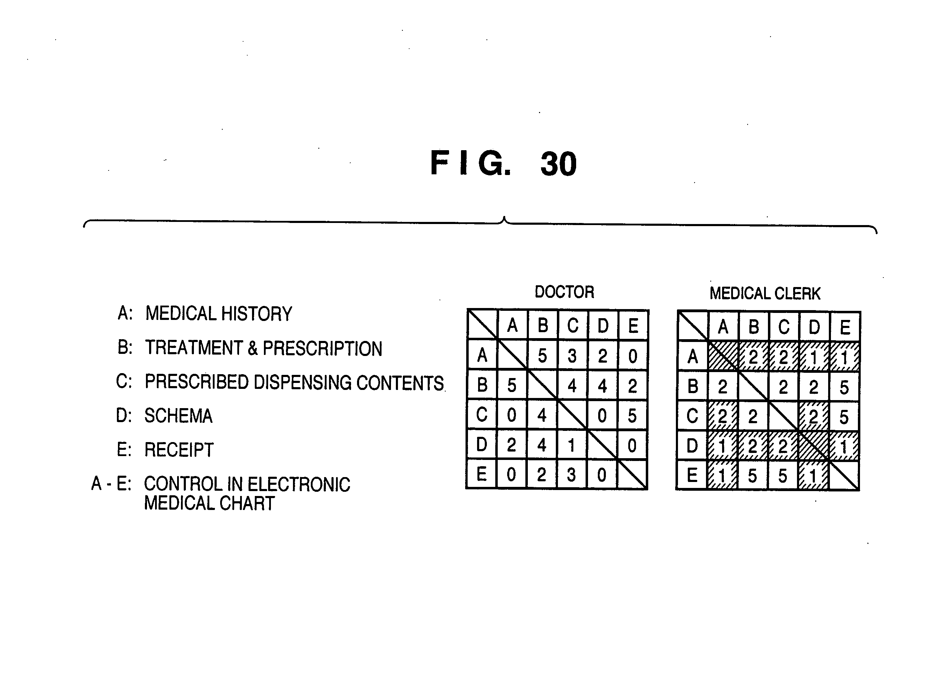

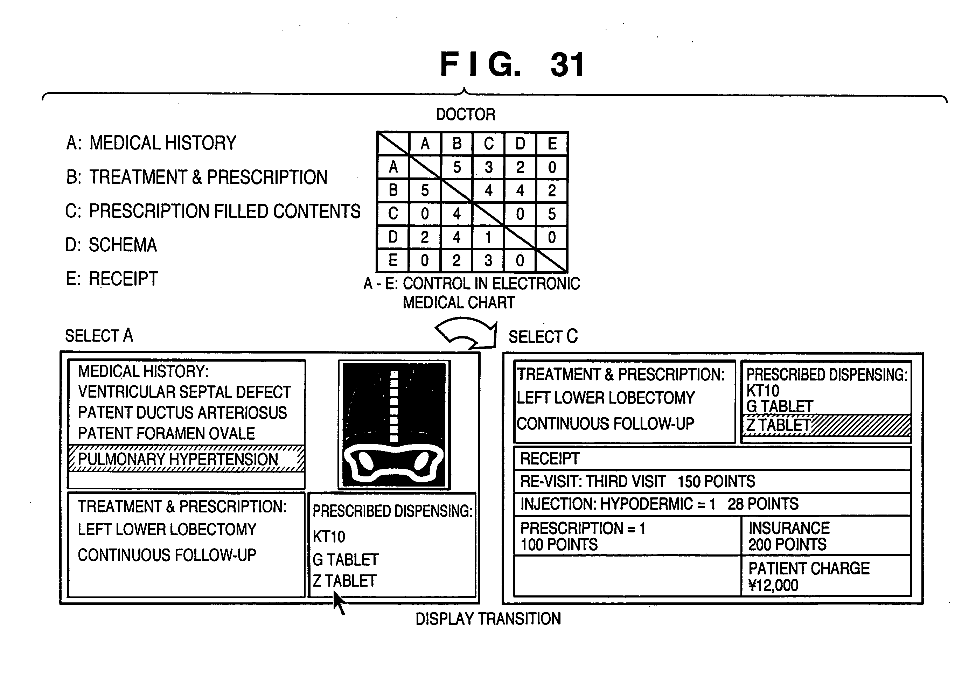

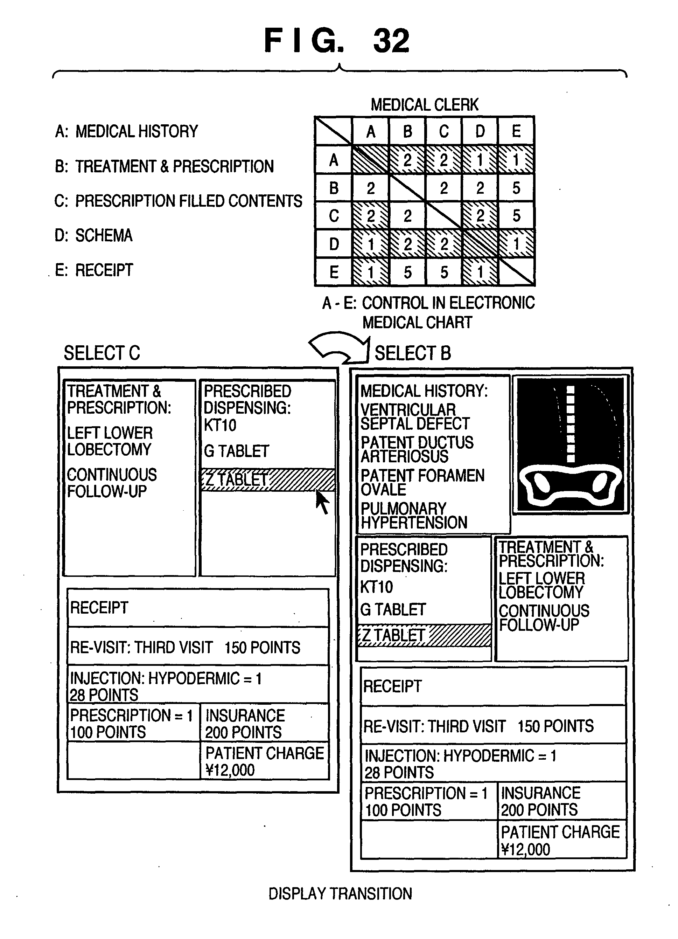

Fig. 30 shows a setting example of the correlation tables possessed by a doctor and medical clerk. Fig. 31 shows a transition state example of display when the doctor who possesses the correlation table shown in Fig. 30 clicks a given control. Fig. 32 shows a transition state example of display when the medical clerk who possesses the correlation table shown in Fig. 30 clicks a given control.

In this way, only the used controls are extracted and are optimally laid out on the window, thus improving user's visibility. Also, since input items other than the user of interest are displayed in a related sequence, confirmation errors and the like can be avoided. Since users possess different correlation tables, display corresponding to the jobs and work contents of the users can be made using a single electronic medical chart.

### Other Embodiment

The present invention can be applied to a system constituted by a plurality of devices (e.g., host computer, interface, reader, printer) or to an apparatus comprising a single device (e.g., copying machine, facsimile machine).

Further, the object of the present invention can also be achieved by providing a storage medium storing program codes for performing the aforesaid processes to a computer system or apparatus (e.g., a personal computer), reading the program codes, by a CPU or MPU of the computer system or apparatus, from the storage medium, then executing the program.

In this case, the program codes read from the storage medium realize the functions according to the embodiments, and the storage medium storing the program codes constitutes the invention.

Further, the storage medium, such as a flexible disk, a hard disk, an optical disk, a magnetooptical disk, CD-ROM, CD-R, a magnetic tape, a nonvolatile type memory card, and ROM can be used for providing the program codes.

Furthermore, besides aforesaid functions according to the above embodiments are realized by executing the program codes which are read by a computer, the present invention includes a case where an OS (operating system) or the like working on the computer performs a part or entire processes in accordance with designations of the program codes and realizes functions according to the above embodiments.

Furthermore, the present invention also includes a case where, after the program codes read from the storage medium are written in a function expansion card which is inserted into the computer or in a memory provided in a function expansion unit which is connected to the computer, CPU or the like contained in the function expansion card or unit performs a part or entire process in accordance with designations of the program codes and realizes functions of the above embodiments.

In a case where the present invention is applied to the aforesaid storage medium, the storage medium stores program codes corresponding to the flowcharts described in the embodiments.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing method for deciding the layout of displayable data in a plurality of containers (407, 408) of a document template, comprising the steps of:
selecting one of said containers having data to be displayed; and
deciding a layout of the container based on the selected container and a correlation table which defines the layout of the plurality of containers.

2. The method according to claim 1, further comprising the step of designating a role, each role having a corresponding correlation table, wherein the decision step includes a step of deciding the layout based on the correlation table corresponding to the designated role.

3. The method according to claim 1 or 2, wherein the correlation table has a flag indicating display or non-display of a container, and the decision step includes a step of controlling display of the container based on the flag.

4. The method according to any one of claims 1 to 3, further comprising the step of reselecting a container from the decided layout, wherein the decision step includes a step of deciding a layout in which the containers are laid out again based on the reselected container and the correlation table.

5. An information processing method comprising the steps of:
laying out contents, and displaying the laid contents on a monitor;
selecting a specific content from the displayed contents; and
changing a combination of contents to be displayed and a layout of the contents in accordance with the selected content.

6. An information processing method as claimed in claim 5 further comprising the steps of:
designating a role of a user.

7. The method according to claims 2 or 6, wherein the said role is at least one of the group consisting of: a doctor, a nurse, a medical engineer, and a medical clerk.

8. An information processing method as claimed in any preceding claim in which the containers comprise an electronic medical chart.

9. A computer program, which when loaded into a computer and executed, performs a method as claimed in any preceding claim.

10. An information processing apparatus for deciding the layout of displayable data in a plurality of containers (407, 408) of a document template, comprising:
selection means adapted to select a container having data to be displayed; and
decision means (121) adapted to decide the layout of the selected container based on the selected container and a correlation table which defines a layout of containers.

11. An information processing apparatus as claimed in claim 11 in which the containers comprise an electronic medical chart.

12. An information processing apparatus comprising:
display control means for laying out contents for an electronic medical chart, and displaying the laid contents on a monitor;
selection means for selecting a specific content from the displayed contents; and
control means for changing a combination of contents to be displayed and a layout of the contents in accordance with the selected content.

13. An information processing apparatus comprising:
designation means adapted to designate a role of a user;
display control means for laying out contents, and displaying the laid contents on a monitor;
selection means adapted to select a specific content from the displayed contents; and
control means adapted to change a combination of contents to be displayed and a layout of the contents in accordance with the selected content and the designated role.
